# EUROPÄISCHE PATENTSCHRIFT

(11) **EP 2 438 119 B1**
(45) Veröffentlichungstag und Bekanntmachung des Hinweises auf die Patenterteilung: **24.09.2014**
(21) Anmeldenummer: 10724299.2
(22) Anmeldetag: 02.06.2010
(51) Int. Cl.: C08L 83/04, C09D 183/04, C08L 5/08, C09D 105/08, C14C 9/00, C08L 75/04

(54) **ZUSAMMENSETZUNG MIT IMPRÄGNIERENDER WIRKUNG**
COMPOSITION HAVING IMPREGNATING EFFECT
COMPOSITION À EFFET D'IMPRÉGNATION

(30) Priorität: 04.06.2009 DE 102009023878
(43) Veröffentlichungstag der Anmeldung: 11.04.2012
(73) Patentinhaber: Werner & Mertz GmbH, 55120 Mainz (DE)
(72) Erfinder: BRAKEMEIER, Andreas, 32699 Extertal (DE); GRATZL, Vera, 55128 Mainz (DE); HAAK, Ralf, 55286 Wörrstadt (DE); KÜHNAPFEL, Schirin, 55437 Appenheim (DE)
(74) Vertreter: Klingseisen, Franz
(86) Internationale Anmeldenummer: PCT/EP2010/003347
(87) Internationale Veröffentlichungsnummer: WO 2010/139466

(56) Entgegenhaltungen:
- EP-A1- 0 180 842
- EP-A1- 2 090 295
- WO-A1-88/01316
- DE-A1- 3 633 874
- DE-A1- 10 327 134

## Beschreibung

Die Erfindung betrifft ein Imprägniermittel mit wasser- und öl- sowie schmutzabweisender Wirkung, d. h. einer imprägnierenden Wirkung, die für Produkte und/oder für Mittel für Oberflächen von verschiedenen Materialien in verschiedenen Applikationsformen verwendet werden kann.

EP 0 180 842 A1 beschreibt einen Imprägnierspray mit Pflegewirkung für Leder und Textilien, enthaltend einen aus Fluorcarbonharzen, Lösungsmittel sowie gegebenenfalls Hilfsstoffen bestehenden Wirkstoff und ein oder mehrere Treibmittel, wobei das Treibmittel ein mit Wasser misch- oder emulgierbares Treibmittel ist und das Lösungsmittel Wasser und/oder ein mit Wasser mischbares Lösemittel ist, und wobei der Wirkstoff als obligatorische Komponente noch übliche Lederpflegezusätze enthält, die gegebenenfalls in Wasser und/oder Alkohol dispergiert bzw. emulgiert sind.

Als Pflegesubstanzen werden dem Imprägnierspray zugesetzte Silikonöle angegeben, um die Wasserabweisung zu verbessern. Als Silikonemulsionstyp wird u.a. VP1019 Wacker-Chemieaminofunktionell-(kationisch) genannt.

EP 2 090 295 A1 beschreibt eine Zusammensetzung zur Reduzierung der Trocknungszeit von Haaren, wobei die Zusammensetzung Polydimethylsiloxan und wenigstens ein Haarstylingpolymer enthält, das ein kationisches Polymer sein kann. Unter anderem wird ein quateinisiertes Chitosan genannt

In gängigen Imprägniermitteln werden als Imprägnierwirkstoffe häufig Fluorcarbonharze und/oder Silikone (auch fluorierte) verwendet, die sowohl als wässrige Produkte aber auch als Produkte auf Lösemittelbasis hergestellt werden können. Je nach Anwendungsgebiet und Applikationsform sind diese bekannten Mittel unterschiedlich aufgebaut.

Durch den Einsatz von Fluorcarbonharzen und fluorierten Silikonen können die Anforderungen an ein Mittel hinsichtlich Wasser- und Ölabweisung erreicht werden, allerdings ergeben sich aufgrund toxikologischer Eigenschaften und Umweltverträglichkeit erhebliche Nachteile Nicht-fluorierte Silikone haben gegenüber den Fluorcarbonharzen und fluorierten Silikonen meist eine geringere imprägnierende Wirkung. Häufig haben sie nur eine wasserabweisende Wirkung und nur selten auch eine geringe ölabweisende Wirkung.

Besondere Anforderungen ergeben sich bei der Formulierung von Imprägniersprays, weil insbesondere die Inhalationstoxikologie zu beachten ist, wodurch sich Einschränkungen in den Förmulierungsmöglichkeiten eines Imprägniersprays ergeben

Der Erfindung liegt die Aufgabe zugrunde, ein Imprägniermittel und/oder Pflegemittel bereitzustellen, das einerseits eine gute wasserabweisende Wirkung hat und andererseits möglichst umweltverträglich ist. Weiterhin soll das Imprägniermittel eine gute öl- und schmutzabweisende Wirkung haben.

Erfindungsgemäß wird einer der genannten, bekannten Imprägnierwirkstoffe zusammen mit einem so genannten kationischen Polymer verwendet. Überraschenderweise hat sich gezeigt, dass die Imprägnierwirkung einer solchen Zusammensetzung wesentlich besser ist als die Summe der Imprägnierwirkungen der Einzelbestandteile.

Bekannte Imprägnierwirkstoffe umfassen unter anderem Fluorcarbonharze und Silikone (Siloxane/Silane/ Silikonharze, auch fluorierte).

Kationische Polymere können durch Einbau von stickstoffhaltigen basischen Gruppen in synthetische oder natürliche Makromoleküle erhalten werden. Beispiele solcher kationischer Polymere sind:
Polyalkylenimine wie Polyethylenimin
Polyvinylamin wie Polyvinylammoniumchlorid, Poly-Diallyldimethyl-ammoniumchlorid Polyvinylpyridin
Polyallylamine
Polyamidamine
Polyharnstoffamine
Polyetheramine.
Polymere, enthaltend primäre, sekundäre und/oder tertiäre Aminogruppen, Polyamidamin-Epichlorhydrinharze,
Polyacrylamine,
Polyacrylate, Polymethacrylate und Copolymerisate aus teilweise aminofunktionellen Monomeren
aminofunktionalisierte Polyurethane,
aminofunktionalisierte Polyolefine
aminofunktionelle bzw. aminofunktionalisierte Biopolymere, z. B.
Polyamide bzw. Polypeptide überwiegend basischer Aminosäuren (Lysin, Arginin, Histidin, Citrulin und Kombinationen von diesen)

Ab einem genügend hohen Grad an Funktionalisierung mit basischen Gruppen (z.B. Aminofunktionalität) können Polymere in sauren wässrigen Lösungen unter Salzbildung gelöst werden. Durch die Protonierung der basischen Gruppen gehen die Makromoleküle dabei in Polykationen über. Daher werden basisch substituierte Polymere häufig auch als kationische Polymere bezeichnet.

Kationische Polymere umfassen ferner Chitosan und dessen Derivate. Liegen bei dem natürlich vorkommenden Chitin im Gesamtmolekül mehr deacetylierte 2-Amino-2-desoxy-β-D-glukopyranose-Einheiten als acetylierte vor, so spricht man von Chitosan. Der Grad der resultierenden Deacetylierung kann variieren. Zur Verbesserung der Löslichkeit in wässrigen Lösungen und zur Verringerung der Viskosität kann dabei die Kettenlänge und/oder der Deacetylierungsgrad des Polymers verändert werden. Aufgrund der durch die Deacetylierung entstandenen freien Aminogruppen ist Chitosan in saurer Lösung ein Polykation mit einer hohen Ladungsdichte.

Für die erfindungsgemäße Zusammensetzung wird ein Chitosan mit einem Desacetylierungsgrad von größer 50%, bevorzugt größer 75% und insbesondere größer 85%, wie z. B. 95 %, verwendet. Das Molekulargewicht kann von ca. 10.000 Dalton bis etwa 5.000.000 Dalton betragen, vorzugsweise von 100.000 bis 2.000.000 und insbesondere von 150.000 bis 1.000.000 Dalton, wie z. B. 400.000 bis 600.000 Dalton.

Neben Chitosan und dessen Derivaten werden für die erfindungsgemäßen Zusammensetzungen bevorzugt kationische Biopolymere wie Polyamide bzw. Polypeptide überwiegend basischer Aminosäuren (Polylysin, Polyarginin, Polyhistidin, Polycitrulin und deren Heteropolymeren) verwendet.

Weiterhin werden in vorteilhafter Weise kationische Kunststoffdispersionen wie z. B. aminofunktionalisierte Acrylat-Copolymerisate und Styrol-Acrylat-Copolymerisate sowie aliphatische und aromatische aminofunktionalisierte Polyurethane vom Polyester- und Polycarbonat-Typ eingesetzt. Unter die kationischen Polymere fallen erfindungsgemäß aber auch weitere basisch funktionalisierte Kunststoffdispersionen.

Als bekannter Imprägnierwirkstoff wird bevorzugt ein nichtfluoriertes Siloxan wie Aminosiloxan, Amino-Amido-siloxan, Alkyl-Aminosiloxan, Alkyl-Amido-Aminosiloxan oder. Polyether-funktionalisiertes Siloxan in Verbindung mit einem kationischen Polymer verwendet.

Der bekannte Imprägnierwirkstoff kann einem funktionalisierten Siloxan vom Typ Aminoalkyl-polydimethylsiloxan, Amidoaminoalkyl-polydimethylsiloxan, AlkylAminoalkyl-polydimethylsiloxan, Alkyl-Amidoaminoalkyl-polydimethylsiloxan, Polyoxyalkylen-polydimethylsiloxan oder Alkyl-Polyoxyalkylen-polydimethylsiloxan entsprechen.

Als bekannte Imprägnierwirkstoffe eignen sich kationische, z. B. aminofunktionalisierte Fluoracrylatharze für die synergistische Wirkung mit einem kationischen Polymer sowie fluorierte Silikone (auch weitgehend funktionalisierte).

Der bekannte Imprägnierwirkstoff kann einem Fluorcarbonharz vom Typ der fluoralkylierten Acrylat-Copolymere oder fluoralkylmodifizierter Polyurethane (vom Polyester und Polycarbonattyp) oder fluoralkylierter Polysulfonamide oder einem fluorierten Silikon vom Typ Fluoralkyl-Aminoalkyl-polydimethylsiloxan oder Fluoralkyl-Mercaptopolydimethylsiloxane entsprechen.

Erfindungsgemäß kann ein einzelner der oben genannten bekannten Imprägnierwirkstoffe mit einem oder mehreren der kationischen Polymere oder ein einzelnes kationisches Polymer mit einem oder mehreren der bekannten Imprägnierwirkstoffe kombiniert werden wie auch mehrere bekannte Imprägnierwirkstoffe mit mehreren der kationischen Polymere kombiniert werden können.

Die synergistische Imprägnier-Verstärkung tritt bei Vorhandensein relativ extremer Konzentrationsverhältnisse der Komponenten ein. Beispielsweise kann das Konzentrationsverhältnis von bekanntem Imprägnierwirkstoff zu kationischem Polymer etwa 20 : 1 betragen. Der imprägnierverstärkende Effekt bleibt jedoch auch bei einem Überschuss des kationischen Polymers, z.B. bei einem Verhältnis von etwa 1:20 erhalten.

Es kann einem an sich bekannten Imprägniermittel ein kationisches Polymer zugegeben werden, um die Imprägnierwirkung des Imprägniermittels zu verbessern. Ein geringer Anteil an kationischem Polymer kann insbesondere in Verbindung mit einem wesentlich verringerten Anteil an bekanntem Imprägnierwirkstoff zur Erzielung einer zumindest gleichen Imprägnierwirkung verwendet werden wie sie durch den bekannten Imprägnierwirkstoff allein in seiner üblichen Konzentration erreichbar ist. Dadurch ist es möglich, den Anteil z. B. an Silikon (Siloxan/Silan/Silikonharz), aber auch an Fluorcarbonharz oder fluoriertem Silikon in einem Imprägniermittel gering zu halten, ohne dass eine Einbuße an imprägnierender Wirkung gegenüber einem höheren Anteil an diesen Imprägnierwirkstoffen ohne Anwesenheit eines kationischen Polymers auftritt.

Nachdem ein kationisches Polymer wie Chitosan, funktionalisiertes Polyacrylat oder funktionalisiertes Polyurethan bislang keine der von herkömmlichen Imprägnierwirkstoffen bekannten Probleme hinsichtlich (öko)toxikologischer Eigenschaften mit sich bringt, ist es von Vorteil, aufgrund der synergistischen Wirkung den Anteil eines hinsichtlich seiner ökologischen Eigenschaften problematischen Imprägnierwirkstoffes wie z.B. Fluorcarbonharz oder fluoriertes Silikon in einem Imprägnier- und/oder Pflegemittel zu reduzieren, wobei man insgesamt eine imprägnierende Wirkung in Verbindung mit einem kationischen Polymer erzielt, die ansonsten nur durch einen hohen Anteil des weniger umweltverträglichen Wirkstoffs wie z.B. Fluorcarbonharz oder fluoriertem Silikon im Imprägnier- bzw. Pflegemittel zu erreichen wäre.

Neben der Reduzierung des Anteils eines hinsichtlich Umweltverträglichkeit problematischen Wirkstoffs kann durch die erfindungsgemäße synergistische Wirkung ein wegen seiner Bioakkumulierbarkeit problematischer Wirkstoff wie Fluorcarbonharz in einem Imprägniermittel auch vollständig ersetzt werden durch einen besser verträglichen Wirkstoff wie z. B. Aminosiloxan, weil die durch das kationische Polymer verstärkende Imprägnierwirkung in Verbindung mit Aminosiloxan insgesamt eine Imprägnierwirkung ergibt, die zuvor mit Fluorcarbonharz allein erreicht wurde.

Vorteilhaft an der erfindungsgemäßen Synergiewirkung ist auch, dass selbst der Anteil von nicht fluoriertem Siloxan in einem erfindungsgemäßen Imprägniermittel reduziert oder gering gehalten werden kann. Nachdem Siloxan nicht gut biologisch abbaubar ist, ist ein geringer Anteil in einem Imprägniermittel aus Umweltgründen vorteilhaft.

Der Gesamtwirkstoffgehalt (trocken) eines erfindungsgemäßen Imprägniermittels auf Basis von nicht-fluorierten Silikonen kann von etwa 0,1 bis zu etwa 60 Gew. % betragen, bevorzugt 0,3 bis 40% und insbesondere 1 bis 20%. Die Untergrenze kann auch bei 1 Gew.-% liegen. Der Rest bis 100% kann Wasser und/oder Lösungsmittel sowie Additive umfassen. Ein bevorzugter Bereich des Gesamtwirkstoffgehalts liegt bis etwa 10,0%. Als Beispiele werden angegeben Imprägniermittel mit einem Gesamtanteil von bekanntem Imprägnierwirkstoff mit kationischem Polymer von 1,1% und 1,7% sowie 6,0%.

Das Verhältnis von nichtfluoriertem Silikon zu kationischem Polymer kann dabei zwischen etwa 20 : 1 und 1 : 20 und bevorzugt zwischen 10 : 1 und 1 : 10 variieren, vor allem zwischen 10 : 1 und 1 : 10 und insbesondere zwischen 5 : 1 und 1 : 5. Verhältnisbeispiele sind 0,5 : 1, 2,5 : 1 und 3,5 : 1, wobei Ausführungsbeispiele mit 0,7, 1,2, 1,7, 2,4 und 3,4 : 1 nachfolgend wiedergegeben werden.

Der Gesamtwirkstoffgehalt (trocken) eines erfindungsgemäßen Imprägniermittels auf Basis von Fluorcarbonharz oder fluorierten Silikonen mit einem kationischen Polymer liegt meist niedriger als bei nichtfluoriertem Silikon. Abhängig von den gewählten Komponeneten kann der Gesamtwirkstoffgehalt bei ca. 0,1 bis zu etwa 40 Gew. % betragen, bevorzugt 0,3 bis 25% und 0,5 bis 10%. In der Praxis wird man häufig einen Gesamtwirkstoffgehalt von 0,3 bis etwa 3% vorsehen, wobei die Obergrenze bei 2 bis 1,5% liegen kann. Ein praktisches Ausführungsbeispiel mit Fluorcarbonharz und Chitosan ist mit einem Gesamtwirkstoffgehalt von 0,56% wiedergegeben.

Das Verhältnis von Fluorcarbonharz bzw. fluoriertem Silikon als klassische Imprägnierwirkstoffe und dem kationischem Polymer kann in einem erfindungsgemäßen Imprägniermittel abhängig vom angestrebten Reduzierungsgrad an klassischem Imprägnierwirkstoff starkt varieren. Beispielsweise ist es möglich ohne Verlust an Imprägnierwirkung die Konzentration eines Fluorcarbonharzes um 60% zu reduzieren, wenn dem Imprägniermittel stattdessen ein geeignetes kationisches Polymer zugesetzt wird und dabei das Konzentrationsverhältnis (Gewichtsverhältnisse) von Imprägnierwirkstoff zu kationischem Polymer von 0,1 : 1, bevorzugt 0,2 : 1 nicht überschritten wird. Ein praktisches Ausführungsbeispiel ist mit einem Verhältnis von 0,12 : 1 wiedergegeben. Insgesamt kann ein Verhältnis im Bereich von 0,05 : 1 bis 0,3 : 1 vorgesehen werden.

Vorzugsweise ist bei Verwendung von Fluorcarbonharz oder fluoriertem Silikon der Anteil an kationischem Polymer immer höher als der an Fluorcarbonharz oder fluoriertem Silikon, während bei Verwendung von nichtfluoriertem Silikon der Anteil an Silikon auch höher sein kann als der an kationischem Polymer.

Bevorzugt sind wasserlösliche Systeme. Eine erfindungsgemäße Zusammensetzung umfasst aber auch auf Lösungsmittel basierte Zusammensetzungen. Bei wasserlöslichen Systemen wird Siloxan in synergistischer Zusammensetzung mit Chitosan vorzugsweise als Mikroemulsion in Wasser verwendet. Ein erfindungsgemäßes Imprägniermittel kann auch als Gel oder Paste vorliegen.

Das synergistische Zusammenwirken eines kationischen Polymers mit einem herkömmlichen Imprägnierwirkstoff lässt sich durch Versuche belegen.

Wasserlösliche bzw. in Wasser dispergierbare Imprägniermittel können zur Ausbildung wasser- und ölabweisender Effekte z. B. auf Bodenbelägen verwendet werden. Die Substanzen dringen in saugfähige Materialien wie z.B. Holz, Stein, Kork oberflächlich ein und verringern die Oberflächenenergie der Substrate so stark, dass das Benetzungsvermögen der Oberfläche durch Flüssigkeiten stark herabgesetzt wird. Dies ergibt einen erhöhten Kontaktwinkel eines Wassertropfens auf der Substratoberfläche. Weiterhin wird die Aufnahmegeschwindigkeit derart behandelter Oberflächen stark reduziert. Dabei tritt häufig nahezu keine oder lediglich eine schwache Filmbildung auf dem Substrat auf. Durch diese Flüssigkeitsabweisung wird es möglich, feuchtigkeitsempfindliche und saugfähige Bodenbeläge durch die Behandlung mit diesen Imprägnier-/Pflegemitteln vor Feuchtigkeitsschäden bzw. dem Eindringen von flüssigem Schmutz zu schützen.

In den folgenden Beispielen wird jeweils Chitosan mit einem Deacetylierungsgrad von 95 % und einem Molekulargewicht von 300.000 bis 500.000 g/mol (Da) verwendet.

Als kationisches Acrylat-Co-Polymer wird eine emulgatorhaltige Dispersion (35% Aktivgehalt) eines Acrylat-Styrol-Copolymerisat mit 25-45% Gewichtsanteil an aminofunktionellen Monomeren und einem Molekulargewicht zwischen 50.000 und 500.000 g/mol (Da) verwendet.

Als Polyurethan-Polymer wird eine emulgatorhaltige Dispersion (35% Aktivgehalt) eines aliphatischen Polyesterpolyurethans (mit ca. 5-25% Gewichtsanteil an aminofunktionellen Monomeren) und einem Molekulargewicht von 15.000 und 200.00 g/mol (Da) verwendet.

Bei den Versuchen wurde, soweit nichts anderes angegeben, das wässrige Imprägniermittel durch einmaliges Bestreichen der jeweiligen Substratoberfläche mittels eines Schwammes oder Tuches aufgetragen, worauf das Imprägniermittel 24 Stunden lang unter Normalbedingungen auf der Substratoberfläche trocknete, bevor ein Wasser- oder Öltropfen zur Prüfung des Kontaktwinkels aufgebracht wurde. Es bildete sich kein durchgehender Film auf der überwiegend porösen Substratoberfläche.

In den folgenden Beispielen enthält die jeweils angegebene Siloxanlösung zur Stabilisierung Tenside als Emulgator, wobei jeweils die gleiche Siloxanlösung für den Vergleich der Einzelkomponente mit der erfindungsgemäßen Zusammensetzung verwendet und nur deren prozentualer Anteil verändert wurde.

Die im Folgenden angegebenen Anteile in Gew.-% beziehen sich jeweils auf Trockensubstanz. Die zuvor, in den Beispielen und in den Ansprüchen angegebenen Verhältnisse beziehen sich auf Gewichtsverhältnisse der Komponenten.

| | |
|---|---|
| Beispiel 1: | Kombination von Siloxan mit Chitosan (statisch) |
| | Als Beispiel wird eine Anwendung zur Wasserabweisung auf unterschiedlichen Substraten mit einem Imprägniermittel erläutert, das eine Mikroemulsion in Wasser eines amino-funktionalisierten Polydimethylsiloxans (im Folgenden Siloxan) und Chitosan mit einem Deacetylierungsgrad von 95% und einem Molekulargewicht von ca. 400.000 Dalton als kationisches Polymer enthält. |
| Beispiel 1.1 | Abb. 1a und 2a zeigen die Ergebnisse eines Imprägnierversuches gegenüber Wasser auf einer geschliffenen Korkoberfläche, wobei Abb. 1a eine Aufsicht von drei Korkplatten und Abb. 2a eine Schrägansicht der Korkplatten der Abb. 1a wiedergibt. |
| | Die Korkoberfläche A wurde mit einer als Imprägnierwirkstoff bekannten 0,6%igen Siloxanlösung behandelt. Die Korkoberfläche B wurde mit einer 0,5%igen Chitosanlösung behandelt. Die Korkoberfläche C wurde mit einer Zusammensetzung enthaltend 0,6% Siloxan und 0,5% Chitosan behandelt. |
| | Die nur mit Siloxan behandelte Oberfläche A zeigt einen auf die Korkoberfläche aufgebrachten Wassertropfen mit deutlicher Begrenzung und großem Kontaktwinkel zur Oberfläche. Dies entspricht der erwarteten Imprägnierwirkung der 0,6%-igen Siloxanlösung. |
| | Ein auf die nur mit 0,5% Chitosan behandelte Korkoberfläche B aufgebrachter Wassertropfen zerfließt und breitet sich unregelmäßig über die Oberfläche aus, wobei die Ränder der Benetzungsfläche einen kleinen Kontaktwinkel mit der Korkoberfläche bilden. |
| | Die mit der Zusammensetzung aus Siloxan und Chitosan behandelte Oberfläche C zeigt eine deutlich verbesserte Imprägnierwirkung durch einen eng begrenzten Wassertropfen, dessen Kontaktwinkel zur Oberfläche im Vergleich zu A deutlich vergrößert ist. |
| Beispiel 1.2 | Abb. 1b und 2b zeigen die Ergebnisse eines Imprägnierversuches gegenüber Wasser auf einer geschliffenen Buchenholzoberfläche, wobei Abb. 1b eine Aufsicht von drei Holzplatten und Abb. 2b eine Schrägansicht der gleichen Holzplatten wiedergibt. |
| | Die Holzoberfläche A wurde mit einer als Imprägnierwirkstoff bekannten 1,7%igen Siloxanlösung behandelt. Die Holzoberfläche B wurde mit einer 1,7%igen Chitosanlösung behandelt. Die Holzoberfläche C wurde mit einer Zusammensetzung aus 1,2% des Siloxans und 0,5% des Chitosans behandelt, sodass deren Gesamtanteil 1,7% beträgt entsprechend dem Anteil von 1,7% der Einzelkomponenten. |
| | Die nur mit Siloxan behandelte Oberfläche A zeigt einen Wassertropfen mit deutlicher Begrenzung und großem Kontaktwinkel zur Oberfläche. Dies entspricht der erwarteten Imprägnierwirkung der 1,7%-igen Siloxanlösung. |
| schwächere | Die nur mit 1,7% iger Chitosanlösung behandelte Oberfläche B zeigt eine schwächere imprägnierende Wirkung. |
| | Die mit der Zusammensetzung aus Siloxan und Chitosan behandelte Oberfläche C zeigt eine verbesserte Imprägnierwirkung durch einen enger begrenzten Wassertropfen, dessen Kontaktwinkel zur Oberfläche im Vergleich |
| | zu A vergrößert ist, obwohl der Anteil an Siloxan von 1,7 auf 1,2% reduziert ist. |
| | Damit wird durch die Zusammensetzung enthaltend Chitosan und Siloxan auf unterschiedlichen Substraten ein deutlicher Synergieeffekt erzielt, der zu einer stärker hydrophobierenden Wirkung und damit insgesamt zu einer besseren Imprägnierwirkung führt. |
| Beipiel 2: | Kombination von Siloxan mit Chitosan (dynamisch) |
| | Es wurde die Veränderung des Kontaktwinkels eines auf die Substratoberfläche Holz (Buche, geschliffen wie in Beispiel 1.2) aufgebrachten Wassertropfens über die Zeit gemessen und die Veränderung des Kontaktwinkels im Verlaufe der Zeit als Kurve wiedergegeben. |
| | Es wurde die gleiche Siloxananlösung als Mikroemulsion in Wasser und das gleiche Chitosan wie in Beispiel 1 verwendet, wobei 1,7% Chitosan und 1,7% Siloxan als Einzelkomponenten und die Zusammensetzung mit 1,2% Siloxan und 0,5% Chitosan untersucht wurde, sodass bei der Zusammensetzung der gleiche Anteil von 1,7% an Wirkstoff wie bei den Einzelkomponenten vorlag. |
| | Die Kurve A in Abb. 3 zeigt die Veränderung des Kontaktwinkels, wenn ein Wassertropfen auf die unbehandelte Buchenholzoberfläche aufgebracht wurde. Es ergab sich ein Absinken des Kontaktwinkels von etwa 68° innerhalb von etwa 47 s auf etwa 28°. |
| | Die Kurve B zeigt die Veränderung des Kontaktwinkels, wenn die Holzoberfläche zuvor mit der 1,7%-igen Chitosanlösung behandelt wurde. Der Kontaktwinkel fiel von ca. 70° innerhalb von etwa 190 s auf etwa 35° ab. |
| | Die Kurve C zeigt die Veränderung des Kontaktwinkels bei Behandlung der Oberfläche mit der 1,7%-igen Siloxanlösung. Es ergab sich anfänglich ein relativ hoher Kontaktwinkel von etwa 115°, der im Verlaufe von etwa 165 s auf einen Wert von etwa 13° abfiel. |
| | Die Kurve D zeigt die Veränderung des Kontaktwinkels über der Zeit, wenn die Holzoberfläche mit der Zusammensetzung enthaltend 1,2% Siloxan und 0,5% Chitosan behandelt wurde. Ausgehend von einem Kontaktwinkel von etwa 127° wurde nach etwa 190 s immer noch ein Kontaktwinkel von etwa 105° erhalten. |
| | Damit wird bei der relativ geringen Zugabe von 0,5 % Chitosan zu 1,2 % Siloxan (d. h. einem Verhältnis Imprägnierwirkstoff zu kationischem Polymer von 2,4 : 1) nicht nur ein geringerer Abfall des Kontaktwinkels über den Untersuchungszeitraum erreicht, sondern es wird über den gesamten Beobachtungszeitraum auch ein größerer Kontaktwinkel erhalten als bei alleiniger Verwendung der einzelnen Komponenten bei gleicher Gesamtwirkstoffkonzentration. |
| Beispiel 3: | Kombination von Siloxan mit kationischem Acrylat-Styrol-Copolymerisat |
| | Ein Vergleich von 1,7% amino-funktionalisiertem Polydimethylsiloxan als Mikroemulsion in Wasser (Kurve A) mit 1,7% amino-funktionalisiertem Acrylat-Styrol-Copolymerisat mit 25-45% Gewichtsanteil an aminofunktionellen Monomeren und einem Molekulargewicht zwischen 50.000 und 500.000 g/mol (Da) als saure Lösung in Wasser (Kurve B) und einer Kombination von 1,2% des amino-funktionalisierten Polydimethylsiloxan und 0,5% des aminofunktionalisierten Arylat-Styrol-Copolymerisates (Kurve C) auf der gleichen Holzoberfläche wie in Beispiel 2 ergab den in Abb. 4 wiedergegebenen Verlauf des Kontaktwinkels. |
| | Die Überlegenheit der Kombination von 1,2% Siloxan und 0,5% kationischem Arylat-Styrol-Copolymer (Verhältnis 2,4 : 1) entsprechend Kurve C gegenüber den Einzelbestandteilen wird auch aus dieser Messkurve in Abb. 4 deutlich, wobei der synergistische Effekt der Komponenten nach einer Zeit von etwa 100 s besonders deutlich hervortritt. |
| Beispiel 4: | Kombination von Siloxan mit kationischem Polyurethan |
| | Wie Abb. 5 zeigt wurden 1,7% eines amino-funktionalisierten Polydimethylsiloxans als Mikroemulsion in Wasser (Kurve A) und 1,7 % eines amino-funktionalisierten Polyesterpolyurethans mit ca. 5-25% Gewichtsanteil an aminofunktionellen Monomeren und einem Molekulargewicht von 15.000 und 200.00 g/mol (Da) als saure Lösung in Wasser (Kurve B) in Beziehung gesetzt zu einer Kombination mit 1,2 % des amino-funktionalisierten Polydimethylsiloxans und 0,5 % des amino-funktionalisierten Polyesterpolyurethans (Kurve C), wobei sich auf der gleichen Holzoberfläche wie in Beispiel 2 und 3 wiederum eine deutliche Verbesserung der erfindungsgemäßen Zusammensetzung gegenüber dem durch die Einzelbestandteile erzielbaren Kontaktwinkel vor allem über einen längeren Beobachtungszeitraum ergibt. |
| Beispiel 5: | Kombination von Siloxan mit Chitosan (Oleophobierung) |
| | Es wurde die Veränderung des Kontaktwinkels eines Öltropfens (Kaydol) auf Fettleder als Substrat über die Zeit gemessen. |
| | Abb. 6 zeigt durch den Verlauf der Kurve A die Veränderung des Kontaktwinkels des Öltropfens auf unbehandeltem Fettleder. |
| | Die Kurve B zeigt den Verlauf des Kontaktwinkels, wenn das Fettleder zuvor mit 1,7% eines amino-funktionalisierten Polydimethylsiloxans als Mikroemulsion in Wasser behandelt wurde. |
| | Die Kurve C zeigt den Kontaktwinkelverlauf nach Behandlung des Fettleders mit 1,7% Chitosan. |
| | Die Kurve D zeigt den Verlauf des Kontaktwinkels bei einer erfindungsgemäßen Kombination von 1,2% des amino-funktionalisierten Polydimethylsiloxans und 0,5% des Chitosans (Verhältnis 2,4 : 1). |
| | Die Verbesserung der Ölabweisung bei der erfindungsgemäßen Zusammensetzung (Kurve D) ist besonders deutlich gegenüber den Kurven B und C der Einzelbestandteile. Entsprechend Kurve D wird ausgehend von |
| | einem Kontaktwinkel von etwa 48° nach etwa 190 s immer noch ein Kontaktwinkel von etwa 43° erhalten, obwohl die Anteile der Einzelkomponenten reduziert sind. |
| | Damit wird bei der relativ geringen Zugabe von 0,5% Chitosan zu 1,2% Siloxan in Wasser nicht nur ein geringerer Abfall des Kontaktwinkels über einen Zeitraum erreicht, sondern es wird über den gesamten Beobachtungszeitraum ein wesentlich größerer Kontaktwinkel erhalten, als bei alleiniger Verwendung der einzelnen Komponenten bei gleicher Gesamtwirkstoffkonzentration. |
| Beispiel 6: | Kombination von Siloxan mit kationischem Polyurethan (Oleophobierung) |
| | In Abb. 7 wird der Verlauf des Kontaktwinkels eines Tropfens Kaydol-Öl auf Papier als Substrat wiedergegeben, wobei die Imprägnierleistung einer sauren, 1,7%igen Lösung eines amino-funktionellen Polyesterpolyurethans (Kurve A) und einer 1,7%igen Lösung eines amino-funktionalisierten Polydimethylsiloxans als Mikroemulsion in Wasser (Kurve B) in Bezeihung gesetzt wird zu einer Kombination aus 1,2% des Siloxans und 0,5% des Polyesterpolyurethans (Kurve C). |
| | Auch auf Papier wird eine deutliche Steigerung der Oleophibierung durch Einsatz der erfindungsgemäßen Zusammensetzung gegenüber den Einzelbestandteile erzielt. Der maximale Kontaktwinkel der Testflüssigkeit Kaydol liegt über den gesamten Beobachtungszeitraum bei der erfindungsgemäßen Zusammensetzung signifikant oberhalb der gefundenen Kontaktwinkel der Einzelkomponenten. |
| Beispiel 7: | Kombination von Siloxan mit aminofunktionellem Polyurethan (Hydrophobierung und Oleophobierung von Beton) |
| | Auf einer Betonoberfläche wurde die Imprägnierwirkung eines 1,7%igen amino-funktionalisierten Polydimethylsiloxans als Mikroemulsion in Wasser mit einer Kombination aus diesem Siloxan und 0,5% eines aminofunktionellen |
| | Polyesterpolyurethans verglichen. Dabei wurde die Schutzwirkung der beiden Imprägniermittel gegen das Eindringen verschiedener Flüssigkeiten (Wasser, 10% Isopropanol in Wasser und Kaydol-ÖI) in den Beton nach einer Kontaktzeit von 30 min bestimmt. |
| | Abb. 9 zeigt die Betonoberfläche, nachdem die zuvor genannten Flüssigkeiten die Betonoberfläche 30 Minuten lang benetzt hatten und nach Ablauf von 30 Minuten die Betonoberfläche von der verbliebenen Flüssigkeit durch Abstreifen entfernt wurde. |
| | Auf der Oberfläche A, die mit der 1,7%-igen Siloxanlösung behandelt wurde, sind deutliche Spuren des Eindringens der verschiedenen Flüssigkeiten in die Betonoberfläche durch dunklere Flecken erkennbar, während auf der mit der erfindungsgemäßen Zusammensetzung (Verhältnis 3,4 : 1) behandelten Oberfläche B kein Eindringen der Flüssigkeit in die Betonoberfläche erkennbar ist. |
| Beispiele 8 : | Kombination von Siloxan mit Chitosan bei veränderten Konzentrationsverhältnissen der Komponenten |
| | Wie im Beispiel 1.2 wurde als Testflüssigkeit ein Wassertropfen auf eine geschliffene Buchenholzoberfläche aufgebracht, wobei die Fläche A mit 1,7% aminofunktionalisiertem Polydimethylsiloxan als Mikroemulsion in Wasser und die Fläche B mit 1,7% Chitosan behandelt wurde. Die Fläche C wurde mit einer Kombination aus 0,7% Aminosiloxan und 1,0 % Chitosan (Gesamtwirkstoffkombination 1,7% und Verhältnis 0,7 : 1) behandelt. |
| | In den Abb. 9 und 10 zeigt die nur mit Siloxan behandelte Buchenholzoberfläche A einen Wassertropfen mit deutlicher Begrenzung und relativ großem Kontaktwinkel zur Holzoberfläche. |
| | Wie deutlich erkennbar ist, zeigt die nur mit Chitosan behandelte Holzoberfläche kaum eine imprägnierende Wirkung. |
| | Die mit der Kombination aus Siloxan und Chitosan behandelte Holzoberfläche C zeigt eine deutlich verbesserte Imprägnierwirkung durch einen eng |
| | begrenzten Wassertropfen, dessen Kontaktwinkel zur Holzoberfläche im Vergleich zu beiden Einzelsubstanzen vergrößert ist. |
| Beispiel 9: | Kombination von Siloxan mit aminofunktionalisiertem Acrylat-Styrol-Copolymer bei erhöhtem Wirkstoffgehalt |
| | Abb. 11 und 12 zeigen als Testflüssigkeit einen Wassertropfen auf einer geschliffenen Buchenholzfläche, wobei die Imprägnierleistung von 6% eines aminofunktionalisierten Polydimethylsiloxans als Mikroemulsion in Wasser auf der Fläche A und 6% eines aminofunktionalisierten Acrylat-Styrol-Copolymerisates als saure Lösung in Wasser auf der Fläche B in Beziehung gesetzt wird zu einer Wirkstoffkombination aus 2,5% dieses Aminosiloxans und 3,5% dieses Acrylat-Styrol-Copolymerisates. |
| | Die mit Siloxan zweimal mittels eines Moltontuchs bestrichene Oberfläche A zeigt keine Imprägnierleistung, weil die in der Siloxanlösung enthaltenen Tenside eine Imprägnierwirkung bei 6%-iger Siloxanlösung verhindern. |
| | Das 6% Acrylat-Styrol-Copolymerisat auf der Oberfläche B hat eine erkennbar imprägnierende Wirkung. |
| | Die mit der erfindungsgemäßen Kombination aus diesem Siloxan und Acrylat-Styrol-Copolymerisat ebenso behandelte Oberfläche C (Gesamtwirkstoff 6 %, Verhältnis Imprägnierwirkstoff zu kationischem Polymer 0,7 : 1) zeigt eine deutlich verbesserte Imprägnierwirkung durch einen eng begrenzten Wassertropfen, dessen Kontaktwinkel zur Holzoberfläche vergrößert ist. Damit wird durch die Wirkstoffkombination bei verringerten Anteilen der Einzelkomponenten ein deutlicher Synergieeffekt erzielt, obwohl die bei C verwendete Siloxanlösung die gleichen Tenside enthielt, die zu dem schlechten Ergebnis auf der Fläche A geführt haben. |
| Beispiel 10.1: | Kombination von Fluorcarbonharz mit Chitosan (Hydrophobierung von Beton) |
| | Auf eine Betonoberfläche wurde in Abb. 13 eine saure 0,15%ige Fluoracrylatlösung aufgetragen und in Beziehung gesetzt zur |
| | Imprägnierleistung des gleichen acrylatharzes bei einer reduzierten Wirkstoffkonzentration von 0,06% in Wasser (Abb. 14). Abb. 15 zeigt die Imprägnierleistung einer erfindungsgemäßen Kombination von nur 0,06% des Fluoracrylatharzes mit 0,5% Chitosan (Verhältnis 0,12 : 1). |
| | Die mit der Zusammensetzung aus Fluoracrylharz und Chitosan behandelte Oberfläche zeigt mindestens die gleiche, sehr gute Imprägnierleistung wie die Referenzprobe mit hoher Fluoracrylatharz-Konzentration von 0,15%. Die nur mit reduzierter Fluoracrylatharz-Konzentration behandelte Referenzfläche in Abb. 14 fällt bezüglich der Hydrophobierleistung deutlich ab. Somit kann durch Zusatz von 0,5% Chitosan die zur Imprägnierung notwendige Konzentration an Fluoracrylatharz in diesem Fall um das 2,5-fache reduziert werden. |
| Beispiel 10.2: | Kombination von Fluorcarbonharz mit Chitosan (Hydrophobierung von Holz) |
| | Auf einer geschliffenen Buchenholzoberfläche wurde in Abb. 16 eine saure0,15%ige kationische Fluoracrylatharzlösung aufgetragen und in Beziehung gesetzt zur Imprägnierleistung des gleichen Fluoracrylatharzes bei einer reduzierten Wirkstoffkonzentration von 0,06% in Wasser (Abb. 17). Abb. 18 zeigt die Imprägnierleistung einer erfindungsgemäßen Kombination von nur 0,06% des Fluoracrylatharzes mit 0,5% Chitosan (Verhältnis 0,12 : 1). |
| | Die mit der Zusammensetzung aus Fluoracrylharz und Chitosan behandelte Oberfläche zeigt die gleiche, sehr gute Imprägnierleistung wie die Referenzprobe mit hoher Fluoracrylatharz-Konzentration von 0,15%. Die nur mit reduzierter Fluoracrylatharz-Konzentration behandelte Referenzfläche in Abb. 17 fällt bezüglich der Hydrophobierleistung deutlich ab. Somit kann durch Zusatz von 0,5% Chitosan, die zur Imprägnierung notwendige Konzentration an Fluoracrylatharz auch in diesem Fall um das 2,5-fache reduziert werden. |

Ein praktisches Ausführungsbeispiel einer erfindungsgemäßen Zusammensetzung umfasst 0,5 % Chitosan
0,6 % aminofunktionalisiertes Polydimethylsiloxan (Verhältnis 1,2 : 1)
0,1 % Parfüm
0,3 % Konservierungsmittel
0,25 % Ameisensäure und
Rest Wasser bis 100 %.

Eine derartige Zusammensetzung kann beispielsweise als Bodenpflegemittel eingesetzt werden.

Ein weiteres Ausführungsbeispiel mit Fluorcarbonharz als bekanntem Imprägnierwirkstoff umfasst
0,5 % Chitosan
0,06 % aminofunktionalisiertes Fluoracrylatharz
0,1 % Parfüm
0,3 % Konservierungsmittel
0,25 % Ameisensäure und
Rest Wasser bis 100%.

In den obigen Beispielen wurde jeweils nur ein bekannter Imprägnierwirkstoff mit einem kationischen Polymer verwendet. Es ist aber auch möglich, eine Kombination von Fluorcarbonharzen und Siloxan als Imprägnierwirkstoff in Verbindung mit einem oder auch mehreren kationischen Polymeren einzusetzen, wobei auf diese Weise der Anteil an Fluorcarbonharz weiter reduziert werden kann, ohne dass eine Verschlechterung der imprägnierenden Wirkung eintritt.

Ein die erfindungsgemäße Zusammensetzung enthaltendes Imprägnier- und/oder Pflegemittel kann weitere Stoffe wie z.B. Konservierungsmittel, Öle, Duftstoffe, Säure, Wachs und Emulgatoren, Tenside, Lösungsmittel wie z.B. Alkohole und dergleichen enthalten. Je nach Applikationsform kann ein solches Imprägniermittel unterschiedlich aufgebaut sein. Die erfindungsgemäße Zusammensetzung kann z.B. in Imprägniersprays, wässrigen Imprägniermitteln und pastös auftragbaren Imprägniermitteln enthalten sein.

Ein die erfindungsgemäße Zusammensetzung enthaltendes Mittel kann für unterschiedliche harte oder elastische Oberflächen wie z.B. Holz und Holzwerkstoffe, Linoleum, Stein (z.B. Kalkstein), Zement, Beton, Keramik, Glas, Kunststoffe und Gummi oder flexible Oberflächen wie z.B. Leder, Textilien, Kork, Papier eingesetzt werden. Von besonderem Vorteil ist die erfindungsgemäße Zusammensetzung bei der Imprägnierung von saugfähigen bzw. porösen Oberflächen.

Ein die erfindungsgemäße Zusammensetzung enthaltendes Mittel kann je nach Formulierung in verschiedener Weise auf die zu behandelnde Oberfläche aufgebracht werden, beispielsweise durch Sprühen, Bestreichen, Wischen, Aufrollen, Rakeln, Tauchen und dergleichen.

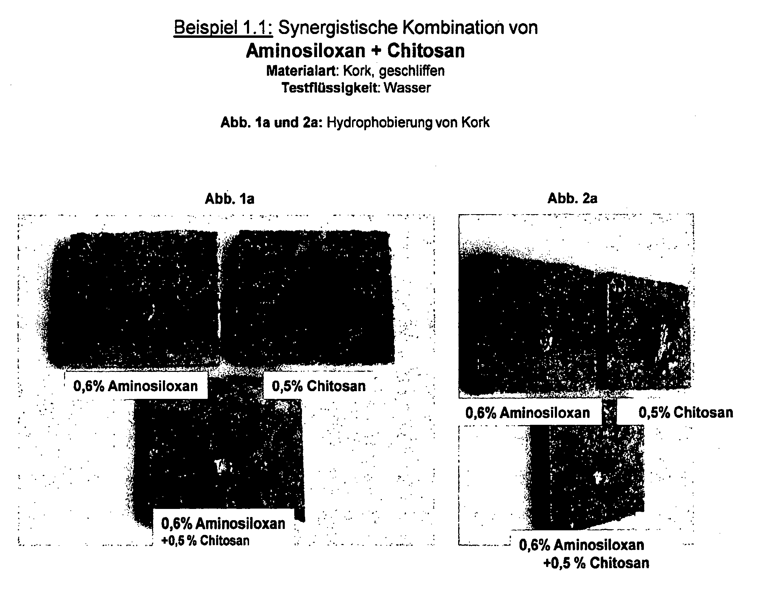

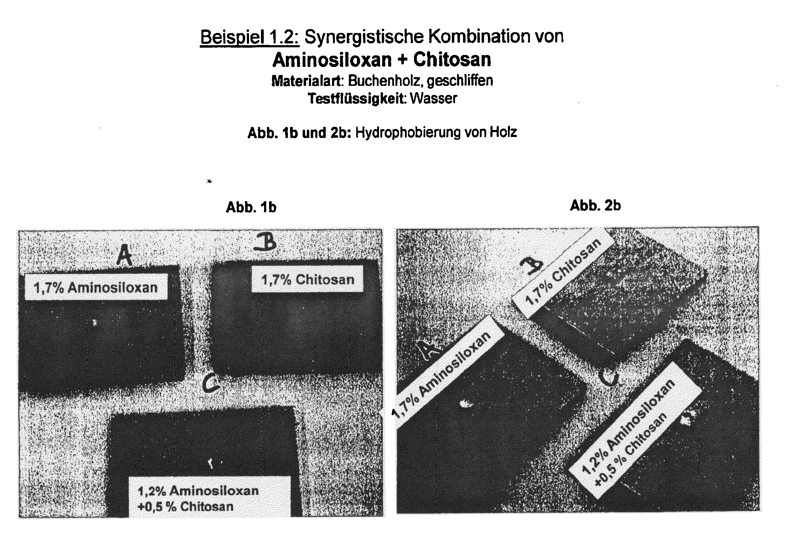

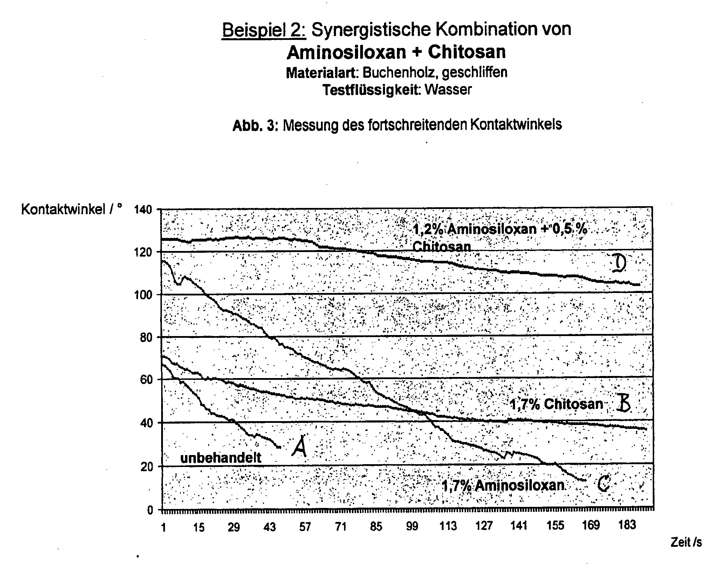

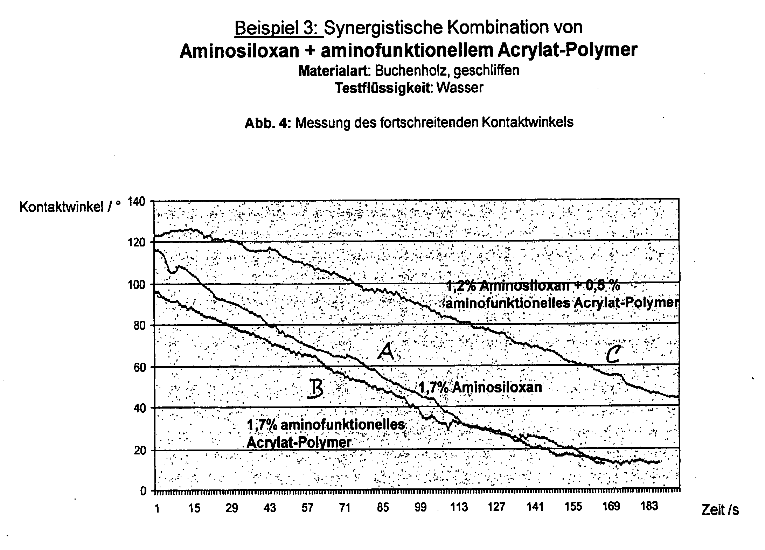

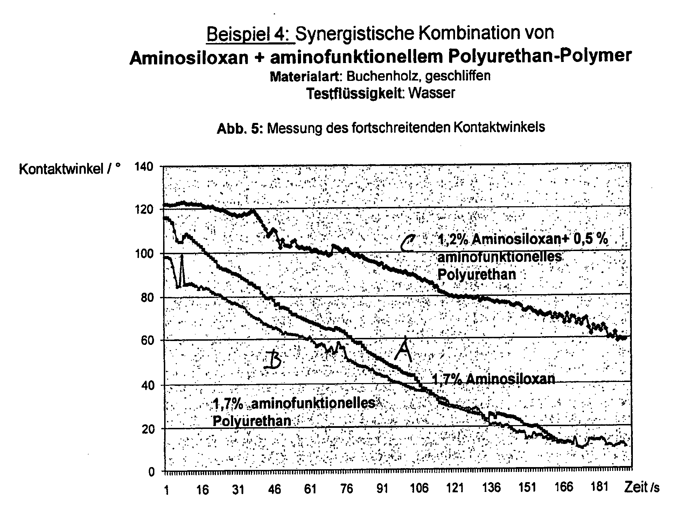

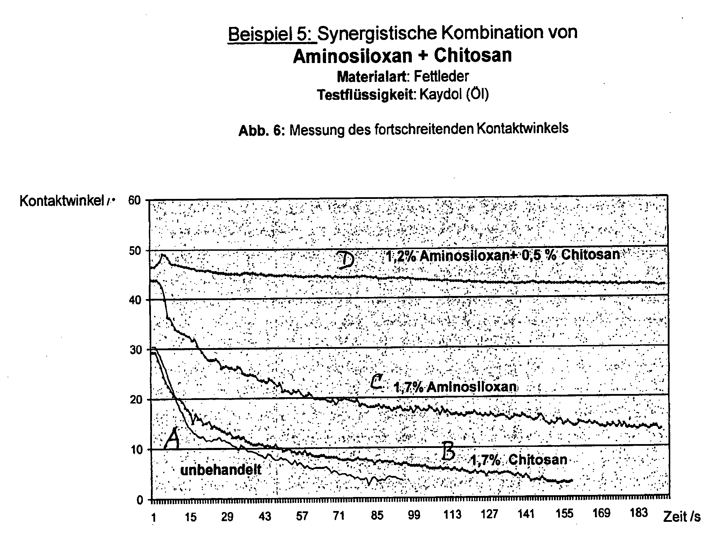

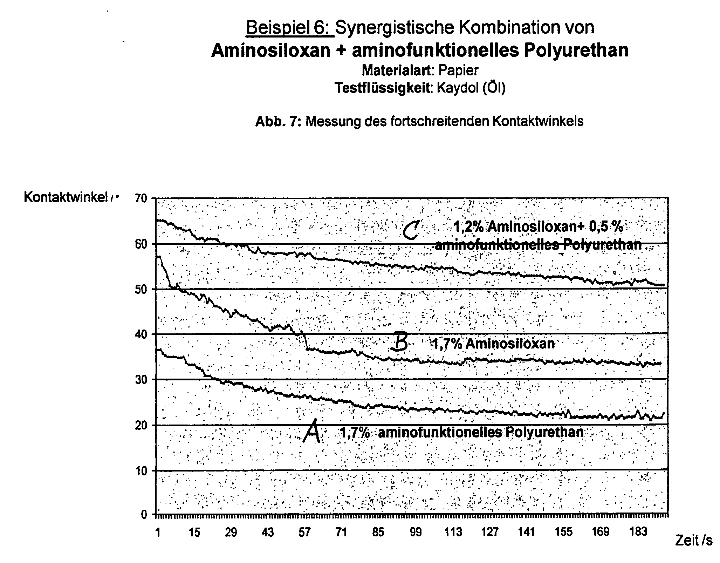

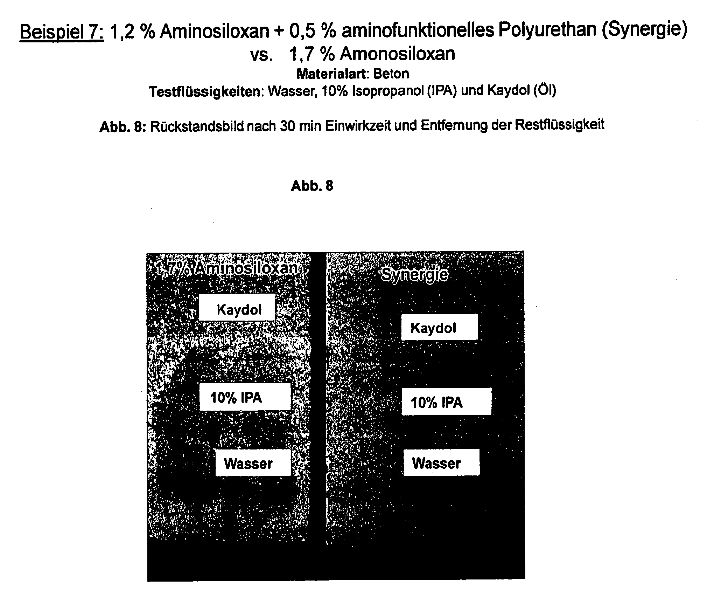

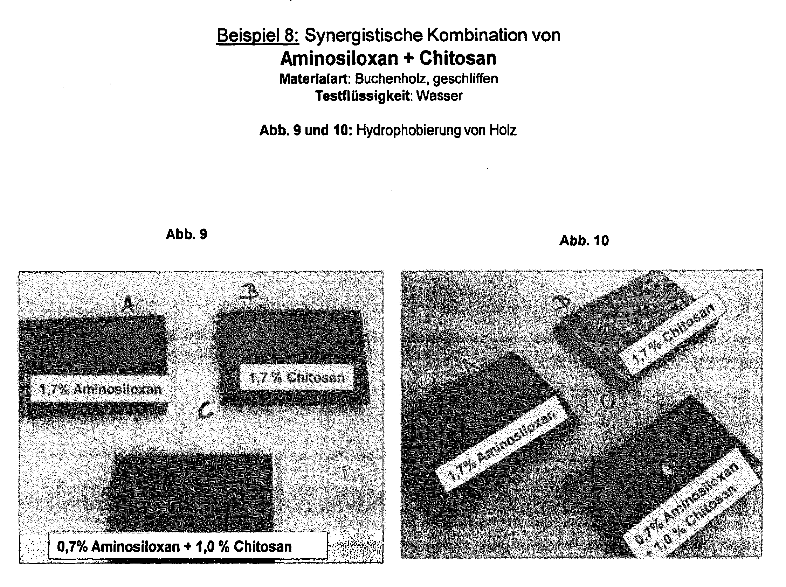

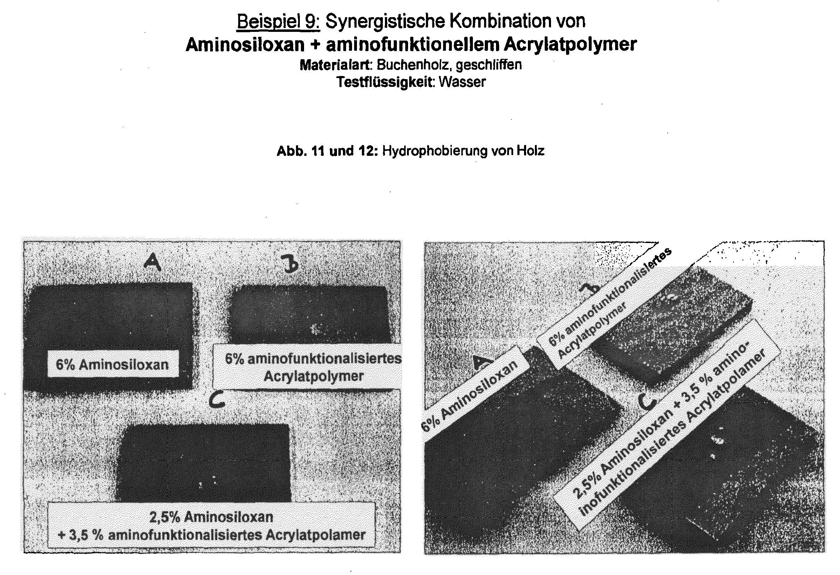

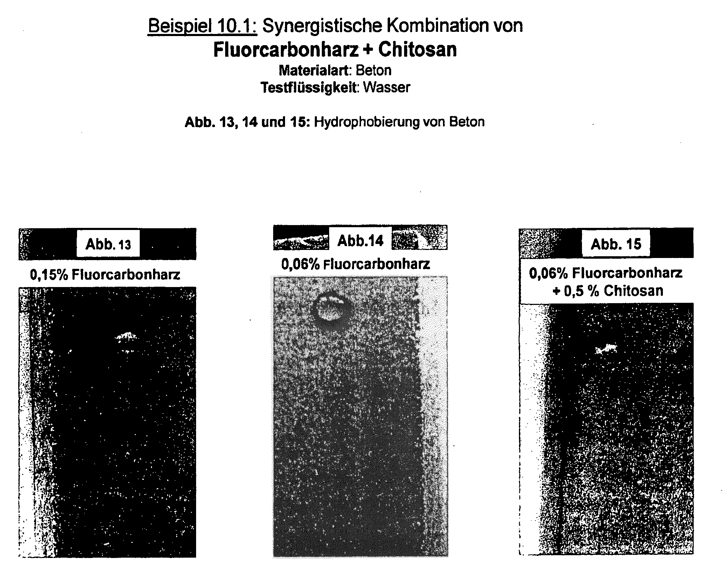

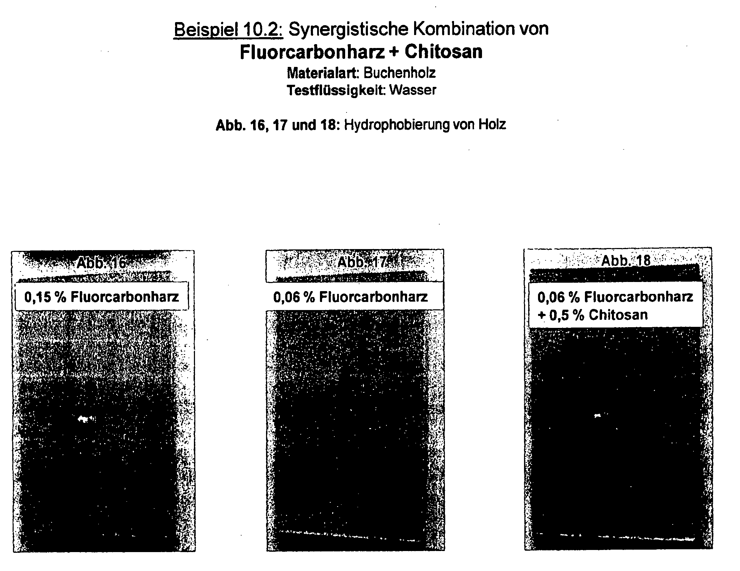

## Patentansprüche

1. Imprägniermittel enthaltend
(A) wenigstens einen bekannten Imprägnierwirkstoff aus der Gruppe
(A1) der Fluorcarbonharze und
(A2) der fluorierten Silikone und
(B) wenigstens ein kationisches Polymer, ausgewählt aus Chitosan, einem Chitosanderivat oder einem anderen Biopolymer, bevorzugt aus Polyamiden bzw. Polypeptiden überwiegend basischer Aminosäuren (Lysin, Arginin, Histidin, Citrulin auch in Kombination), oder aus einem aminofunktionalisierten (Meth)acrylat-Copolymer bzw einem aminofunktionalisierten Styrolacrylat-Copolymer oder einem aliphatischen und aromatischen aminofunktionalisierten Polyurethan vom Polyester- und Polycarbonat-Typ.

2. Imprägniermittel nach Anspruch 1, wobei Chitosan mit einem Deacetylierungsgrad von über 50%, vorzugsweise wenigstens 75%, bevorzugt wenigstens 85% und insbesondere wenigstens 90% verwendet wird.

3. Imprägniermittel nach Anspruch 1, wobei als bekannter Imprägnierwirkstoff ein nichtfluoriertes Siloxan wie Aminosiloxan, Aminoamidosiloxan, Alkyl-Aminosiloxan, Alkyl-Amidoaminosiloxan oder Polyether-funktionalisiertes Siloxan in Verbindung mit einem kationischen Polymer verwendet wird.

4. Imprägniermittel nach Anspruch 3 , wobei der bekannte Imprägnierwirkstoff einem funktionalisierten Siloxan vom Typ Aminoalkyl-polydimethylsiloxan, Amidoaminoalkyl-polydimethylsiloxan, Alkyl-Aminoalkyl-polydimethylsiloxan, Alkyl-Amidoaminoalkyl-polydimethylsiloxan, Polyoxyalkylen-polydimethylsiloxan oder Alkyl-Polyoxyalkylen-polydimethylsiloxan entspricht.

5. Imprägniermittel nach einem der Ansprüche 1 bis 4, wobei ein aminofunktionalisiertes Fluoracrylatharz in Verbindung mit einem kationischen Polymer verwendet wird.

6. Imprägniermittel nach Anspruch 5, wobei der bekannte Imprägnierwirkstoff einem Fluorcarbonharz vom Typ der fluoralkylierten (Meth)acrylat-Copolymere oder fluoralkylmodifizierter Polyurethane (vom Polyester und Polycarbonattyp) oder fluoralkylierter Polysulfonamide oder einem fluorierten Silikon vom Typ Fluoralkyl-Aminoalkyl-polydimethylsiloxan oder Fluoralkyl-Mercaptopolydimethylsiloxane entspricht.

7. Imprägniermittel nach einem der vorhergehenden Ansprüche, wobei der Gesamtwirkstoffgehalt des Imprägniermittels 0,1 bis 60 Gew.-% beträgt, bevorzugt 0,3 bis 40 Gew.-% und insbesondere 0,5 bis 10 Gew - %.

8. Imprägniermittel nach Anspruch 7, wobei das Konzentrationsverhältnis von nichtfluoriertem Silikon zu kationischem Polymer zwischen 20 : 1 und 1 : 20, insbesondere zwischen 10 : 1 und 1 : 10 variieren kann und bevorzugt zwischen 5 : 1 und 1 : 5 liegt.

9. Imprägniermittel nach einem der Ansprüche 5 bis 7, wobei das Konzentrationsverhältnis von Fluorcarbonharz oder fluoriertem Silikon zu kationischem Polymer von 1:20 bis 5:1, bevorzugt 1:10 bis 2:1, insbesondere 1:8 bis 0,5:1 liegt.

10. Imprägniermittel nach einem der Ansprüche 5 bis 7, wobei das Konzentrationsverhältnis von Fluorcarbonharz oder fluoriertem Silikon zu kationischem Polymer von 0,05 : 1 bis 0,3 : 1, insbesondere 0,1 : 1 bis 0,2 : 1 liege.

11. Imprägniermittel nach Anspruch 9 oder 10, wobei der Gesamtwirkstoffgehalt von Fluorcarbonharz oder fluoriertem Silikon und kationischem Polymer bei 0,3 Gew.-% bis 3 Gew.-%, insbesondere bei 0,5 Gew.-% bis 1,5 Gew.-% liegt.

12. Imprägniermittel nach Anspruch 1, umfassend
0,6 % Aminoalkyl-Polydimethylsiloxan
0,5 % Chitosan
0,1 % Parfüm
0,3 % Konservierungsmittel
0,25 % Ameisensäure und
Rest Wasser bis 100%.

13. Imprägniermittel nach Anspruch 1, umfassend
0,06 % fluoralkyliertes Acrylat-Copolymer
0,5 % Chitosan
0,1 % Parfüm
0,3 % Konservierungsmittel
0,25 % Ameisensäure und
Rest Wasser bis 100%.

14. Imprägniermittel nach einem der Ansprüche 1 bis 13, wobei das die Imprägniermittel enthaltende Imprägniermittel als wässrige Lösung vorliegt.

15. Imprägniermittel nach Anspruch 14, wobei in dem Imprägniermittel Siloxan in einer Mikroemulsion in Verbindung mit Chitosan verwendet wird.

16. Verwendung eines Imprägniermittels, enthaltend
(A) wenigstens einen bekannten Imprägnierwirkstoff aus der Gruppe
(A1) der Fluorcarbonharze und
(A2) der fluorierten oder nicht fluorierten Silikone, und
(B) wenigstens ein kationisches Polymer, ausgewählt aus Chitosan, einem Chitosanderivat oder einem anderen Biopolymer oder aus einem aminofunktionalisierten (Meth)acrylat-Copolymer bzw. einem aminofunktionalisierten Styrolacrylat-Copolymer oder einem aliphatischen und aromatischen aminofunktionalisierten Polyurethan vom Polyester- und Polycarbonat-Typ
für die Behandlung von festen oder elastischen Oberflächen wie Holz und Holzwerkstoffe, Linoleum, Stein, Zement, Beton, Keramik, Glas, Kunststoffen und Gummi, Metall oder lackiertes Metall, und
für die Behandlung von porösen bzw. saugfähigen flexiblen Oberflächen wie Leder, Textilien und Papier,
wobei die Verwerdung auf Haaren ausgeschlossen ist

## Claims

1. Impregnant containing
(A) at least one known impregnant from the group (AI) of fluorocarbon resins
and
(A2) of fluorinated silicones, and
1. at least one cationic polymer selected
from chitosan, a chitosan derivative or another biopolymer, preferably from polyamides or polypeptides of predominantly basic amino acids (lysine, Arginine, histidine, citiulin including in combination), or from an amino-functionalised (meth) acrylate copolymer or a functionalised styrene acrylate copolymer, or an aliphatic and aromatic amino-functionalised polyurethane of the polyester and polycarbonate type.

2. Impregnant according to claim 1, wherein chitosan is used with a degree of deacetylation of more than 50%, preferably at least 75%, more preferably at least 85% and ideally at least 90%.

3. Impregnant according to claim 1, wherein a non-fluorinated siloxane such as aminosiloxane, aminoamidosiloxane, alkyl artiinosiloxane, alkyl amido or polyether functionalised siloxane is used in conjunction with a cationic polymer as the known impregnant

4. Impregnant according to claim 3, wherein the known impregnant is a functionalised siloxane of the aminoalkyl polydimethylsiloxane, amidoaminoalkyl polydimethylsiloxane,alkyl-aminoalkyl polydimethylsiloxane alkyl amidoaminoalkyl polydimethylsiloxane, polyoxyalkylene-polydimethylsiloxane or polydimethylsiloxane alkyl'polyoxyalkylen type.

5. Impregnant according to any one of claims 1 to 4, wherein an amino-functionalised fluoracrylate resin is used in conjunction with a cationic polymer

6. Impregnant according to claim 5, wherein the known impregnant is a fluorine carbon resin of the type of fluoroalkylated (meth) acrylate copolymers or fluoialkyl modified polyurethane (polyester and polycarbonate type) or fiuoralkylised polysulfonamides or a fluorinated silicone of the type fluoroalkyl-aminoalkyl-polydimethylsiloxane or fluoroalkyl mercaptopolydimethylsiloxane

7. Impregnant according to one of the preceding claims, wherein the total active ingredient content of the impregnant is 0.1 to 60 percent by weight, preferably up to 0.3 to 40 percent by weight and ideally 0.5 to 10 percent by weight

8. Impregnant according to claim 7, wherein the concentration ratio of non-fluorinated silicone to the cationic polymer can vary between 20:1 and 1:20, in particular between 10:1 and 1:10 and preferably between 5:1 and 1:5.

9. Impregnant according to one of claims 5 to 7, wherein the concentration ratio of fluorocarbon resin or fluorinated silicone to the cationic polymer is from 1:20 to 5:1, preferably 1:10 to 2:1, ideally 1:8 to 0.5:1

10. Impregnant according to one of claims 5 to 7, wherein the concentration ratio of fluorocarbon resin or fluorinated silicone to the cationic polymer is from 0.05:1 to 03:1, ideally 0.1:1 to 0.2:1

11. Impregnant according to claims 9 or 10, wherein the total active ingredient content of fluorocarbon resin or fluorinated silicone and the cationic polymer is 0.3 to 3 percent by weight, ideally 0 5 to 1.5 percent by weight.

12. Impregnant according to claim 1, comprising 0.6% aminoalkyl polydimethylsiloxane 0.5% chitosan 0.1% perfume 0.3% preservative 0.25% formic acid and residual water to 100%

13. Impregnant according to claim 1, comprising 0.06% fluoroalkylated acrylate copolymer 0 5% chitosan 0.1% perfume 0.3% preservative 0.25% formic acid and residual water to 100%

14. Impregnant according to one of claims 1 to 13, wherein the impregnant containing the impregnant ingredient is present as an aqueous solution,

15. Impregnant according to claim 14, whereby siloxane in a microemulsion is used in combination with chitosan in the impregnant ingredient

16. Use of an impregnant comprising
A. at least one known impregnant from the group
(AI) of fluorine carbon resins and
(A2) of the fluorinated or non-fluorinated silicones, and
B at least one cationic polymer selected from chitosan, a chitosan derivative or another biopolymer or
from an amino-functionalised (meth) acrylate copolymer, an amino-functionalised styrene-acrylate copolymer or an aliphatic and aromatic amino-functionalised polyurethane of the polyester and polycarbonate type
for the treatment of solid or elastic surfaces such as wood and wood-based materials, linoleum, stone, cement, concrete, ceramics, glass, plastics and rubber, metal or painted metal, and
for the treatment of porous or absorbent flexible surfaces such as leather, textiles and paper,
with use on hair being excluded

## Revendications

1. Agent d'imprégnation contenant
(A) au moins une substance active d'imprégnation connue du groupe
(A1) des résines fluorocarbonées, et
(A2) des silicones fluorées, et
(B) au moins un polymère cationique, choisi parmi le chitosane, un dérivé du chitosane ou un autre biopolymère, de préférence parmi les polyamides ou les polypeptides d'acides aminés principalement basiques (lysine, arginine, histidine, citruline aussi en combinaison), ou parmi un copolymère de (méth)acrylate à fonctionnalité amino ou un copolymère d'acrylate de styrène à fonctionnalité amino ou un polyuréthanne aliphatique ou aromatique à fonctionnalité amino des types polyester et polycarbonate

2. Agent d'imprégnation selon la revendication 1, dans lequel on utilise un chitosane ayant un degré de désacétylation supérieur à 50 %, de préférence d'au moins 75 %, préférentiellement d'au moins 85 % et en particulier d'au moins 90 %

3. Agent d'imprégnation selon la revendication 1, dans lequel on utilise en tant que substance active d'imprégnation connue un siloxane non fluoré tel qu'un aminosiloxane, un aminoamidosiloxane, un alkyl-aminosiloxane, un alkylamidoaminosiloxane ou un siloxane à fonctionnalité polyéther en liaison avec un polymère cationique.

4. Agent d'imprégnation selon la revendication 3, dans lequel la substance active d'imprégnation connue correspond à un siloxane fonctionnalisé du type aminoalkyl-polydiméthylsiloxane, amidoaminoalkyl-polydiméthylsiloxane, alkylaminoalkyl-polydiméthylsiloxane, alkyl-amidoaminoalkyl-polydiméthylsiloxane, polyoxyalkylène-polydiméthylsiloxane ou alkyl-polyoxyalkylène-polydiméthylsiloxane.

5. Agent d'imprégnation selon l'une des revendications 1 à 4, dans lequel on utilise une résine de fluoroacrylate à fonctionnalité amino en liaison avec un polymère cationique.

6. Agent d'imprégnation selon la revendication 5, dans lequel la substance active d'imprégnation connue correspond à une résine fluorocarbonée du type des copolymères de (méth)acrylate fluoroalkylés ou des polyuréthannes à modification fluoroalkyle (du type polyester et polycarbonate), ou des polysulfonamides fluoroalkylés, ou à une silicone fluorée du type fluoroalkyl-aminoalkyl-polydiméthylsiloxane ou fluoroalkyl-mercaptopolydiméthylsiloxanes.

7. Agent d'imprégnation selon l'une des revendications précédentes, dans lequel la teneur totale en substance active de l'agent d'imprégnation est de 0,1 à 60 % en poids, de préférence de 0,3 à 40 % en poids et en particulier de 0,5 à 10 % en poids.

8. Agent d'imprégnation selon la revendication 7, dans lequel le rapport entre la concentration de la silicone non fluorée et celle du polymère cationique peut varier entre 20:1 et 1:20, en particulier entre 10:1 et 1:10, et est de préférence compris entre 5:1 et 1:5.

9. Agent d'imprégnation selon l'une des revendications 5 à 7, dans lequel le rapport entre la concentration de la résine fluorocarbonée ou de la silicone fluorée et celle du polymère cationique est de 1:20 à 5:1, de préférence de 1:10 à 2:1, en particulier de 1:8 à 0,5:1.

10. Agent d'imprégnation selon l'une des revendications 5 à 7, dans lequel le rapport entre la concentration de la résine fluorocarbonée ou de la silicone fluorée et celle du polymère cationique est de 0,05:1 à 0,3:1, en particulier de 0,1:1 à 0,2:1.

11. Agent d'imprégnation selon la revendication 9 ou 10, dans lequel la teneur totale en la substance active de la résine fluorocarbonée ou de la silicone fluorée et du polymère cationique est de 0,3 % en poids à 3 % en poids, en particulier de 0,5 % en poids à 1,5 % en poids.

12. Agent d'imprégnation selon la revendication 1, comprenant
0,6 % d'aminoalkyl-polydiméthylsiloxane
0,5 % de chitosane
0,1 % de parfum
0,3 % d'un conservateur 0,25 % d'acide formique et
de l'eau qsp 100%.

13. Agent d'imprégnation selon la revendication 1, comprenant
0,06 % d'un copolymère d'acrylate fluoroalkylé
0,5 % de chitosane
0,1 % de parfum
0,3 % d'un conservateur
0,25 % d'acide formique et
de l'eau qsp 100%.

14. Agent d'imprégnation selon l'une des revendications 1 à 13, dans lequel l'agent d'imprégnation contenant les agents d'imprégnation est présent sous forme d'une solution aqueuse.

15. Agent d'imprégnation selon la revendication 14, dans lequel on utilise l'agent d'imprégnation siloxane dans une microémulsion en liaison avec du chitosane.

16. Utilisation d'un agent d'imprégnation contenant
(A) au moins une substance active d'imprégnation connue du groupe
(A1) des résines fluorocarbonées, et
(A2) des silicones fluorées ou non fluorées, et
(B) au moins un polymère cationique choisi parmi le chitosane, un dérivé du chitosane ou un autre biopolymère, ou parmi un copolymère de (méth)acrylate à fonctionnalité amino ou un copolymère d'acrylate de styrène à fonctionnalité amino ou un polyuréthanne aliphatique et aromatique à fonctionnalité amino du type polyester et polycarbonate,
pour le traitement de surfaces solides ou élastiques telles que le bois et les matériaux dérivés du bois, le linoléum, la pierre, le ciment, le béton, la céramique, le verre, les matières plastiques et le caoutchouc, le métal ou le métal laqué, et
pour le traitement de surfaces souples poreuses ou absorbantes telles que le cuir, les textiles et le papier,
à l'exclusion d'une utilisation sur les poils ou cheveux
